# EUROPEAN PATENT APPLICATION

(11) **EP 2 629 241 A1**
(43) Date of publication of application: **21.08.2013**
(21) Application number: 13275025.8
(22) Date of filing: 08.02.2013
(51) Int. Cl.: G06K 9/00

(54) **Control of a wearable device**

(30) Priority: 16.02.2012 US 201213397919; 17.02.2012 EP 12275016
(71) Applicant: Orcam Technologies Ltd., 91450 Jerusalem (IL)
(72) Inventor: Wexler, Yonatan, 91450 Jerusalem (IL); Shashua, Amnon, 90805 Mevasseret Zion (IL); Armon, Shachar, 91450 Jerusalem (IL)
(74) Representative: Grainger, David Fraser

(57) **Abstract**

A wearable device including a camera (12) and a processor (16) and a control interface between the wearable device and a user of the wearable device. An image frame (14) is captured from the camera. Within the image frame (14), an image of a finger of the user is recognized. The recognition of the finger by the wearable device controls the wearable device.

## Description

### BACKGROUND

### 1. Technical Field

The invention relates to control of a wearable device. Embodiments of the present invention relate to vision processing.

### 2. Description of Related Art

The visually impaired suffer from difficulties due to lack of visual acuity, field of view, color perception and other forms of visual impairments. These challenges impact everyday life in many aspects for example mobility, risk of injury, independence and situational awareness.

An appearance-based classifier as opposed to a model based classifier uses image data to classify and recognize thereby on object. Appearance based classifiers have been used with limited success for facial recognition. One of the challenges in using appearance based classifiers for facial recognition is achieving reliable facial recognition when the face is viewed from different angles.

Appearance-based classifiers may be implemented using support vector machines which are supervised learning methods used for classification and regression. Viewing the input data as two sets of vectors in an n-dimensional space, a support vector machine constructs a separating hyper-plane in that space, one which maximizes the "margin" between the two data sets. To calculate the margin, two parallel hyper-planes are constructed, one on each side of the separating one, which are "pushed up against" the two data sets. Intuitively, a good separation is achieved by the hyper-plane that has the largest distance to the neighboring data points of both classes. The intention is that, the larger the margin or distance between these parallel hyper-planes, the better generalization of the classifier.

### BRIEF SUMMARY

According to an aspect of the invention, there is provided a method as in claim 1.

According to an aspect of the invention, there is provided a wearable device as in claim 11.

Various methods for interfacing between a wearable device and a user of the wearable device are provided herein. The device includes a camera and a processor connectible thereto. An image frame is captured from the camera. Within the image frame, an image of a finger of the user is recognized to control the wearable device. The recognition may be performed by using an appearance-based classifier. The appearance-based classifier may be previously trained on at least one training set of images, multiple fingers of different persons and/or multiple images of one or more fingers of the user.

The recognition of the image of the finger by the wearable device may be performed from information in a single image frame. The wearable device may be mobile and the recognition may be performed while the camera is not stationary but moving. Upon the recognition of the image of the finger, confirmation may be provided to the user that the finger is recognized.

The recognition of the image the finger may include recognition of an image of two fingers: an index finger and thumb, an index finger and middle finger and/or a thumb and pinky finger. Upon recognition of the finger, the vicinity of the image may be searched for text. Upon recognition of the finger, the vicinity of the image of the finger may be searched for an image of an object such as a vehicle, a newspaper, a signpost, a notice, a book, a bus, a bank note and/or a traffic signal. The image of the finger being recognized may be located on either an image of a left hand or an image of a right hand. An image of the finger may be located in a sequence of images, and changes in the image of the finger may be tracked in the sequence. The tracked changes may be indicative of a query and/ or intent of the user regarding an object in the field of view of the camera.

Upon recognition of the image of the finger, an audible confirmation may be made to the user that the finger is recognized.

Various wearable devices including a camera connectible to a processor are provided herein and a control interface between the wearable device and a user of the wearable device. An image frame is captured from the camera. Within the image frame, a finger of the user is recognized. The recognition of the finger by the wearable device controls the wearable device. The image of the finger of the user may be recognized by using an appearance-based classifier. Recognition of respective images of different fingers of the user may provide different control inputs to the wearable device. A speaker or an ear piece may be operable to audibly confirm to the person that a finger is detected.

The wearable device may recognize an image of the finger of the user and upon recognition of the image the finger, search the image frame in the vicinity of the image of the finger for an image of an obj ect in the environment of the user.

The wearable device may include a text detection module configured to search in the vicinity of the image of the finger for text. The wearable device may include a module configured for searching in the vicinity of the image of the finger for an image of an object a vehicle, a newspaper, a signpost, a notice, a book, a bus, a bank note and/or a traffic signal.

Various methods and systems are provided for computerized real-time recognition of an image of a finger, using a camera attached to a processor. An image frame is captured in the field of view of the camera. Within the image frame, a first picture element may be detected in the vicinity of an edge of image intensity to provide a position and direction of the edge. The edge includes a gradient in image intensity of magnitude greater than a threshold which may be previously stored. At least one ray, one or both of a first ray is projected and an opposing second ray may be projected. The first ray propagates from the first picture element in the direction of the edge and the second ray propagates from the first picture element, approximately 180 degrees to or opposing the first ray. Classification may be performed by deciding if the ray crosses an image of a finger, and if so a second picture element located in the vicinity of the ray, coincides with a second edge of the image of the finger. The decision, that the ray crosses an image of a finger and that the location of the second picture element coincides with the second edge of the image of the finger, is performable by a machine-learning based classifier.

The machine-learning based classifier may be used to decide if the ray crosses an image of the finger. A center point on the ray may be stored. The center point lies between the first picture element and the second picture element on the image of the finger.

Multiple first picture elements are similarly processed and the center points may be clustered into multiple clusters responsive to relative location and relative alignment in the image frame.

A classification of the clusters may be performed using the machine-learning appearance based classifier. A second classification of the clusters may be made using the appearance-based classifier, thereby recognizing the image of the finger. Prior to the second classification, the clusters may be re-oriented, thereby straightening the image of the finger to correspond to an image of a straight finger.

The foregoing and/or other aspects will become apparent from the following detailed description when considered in conjunction with the accompanying drawing figures.

### BRIEF DESCRIPTION OF THE DRAWINGS

Embodiments of the invention are herein described, by way of example only, with reference to the accompanying drawings, wherein:
Figure 1 shows a block diagram of a system, according to a feature of an embodiment of the present invention;
Figure 2 shows a line drawing of a person wearing a camera, according to a feature of an embodiment of the present invention;
Figure 3a shows a flow chart for a method, according to a feature of an embodiment of the present invention;
Figure 3b illustrates a simplified example of a recognition algorithm for recognizing an image of a finger, according to a feature of an embodiment of the present invention;
Figures 4-6 show an image frame including an image of a hand with a pointing finger, and illustrate image processing steps, according to a feature of an embodiment of the present invention; and
Figures 7-9 illustrate a user of a wearable device pointing at a text, a bus and a traffic light respectively, according to a feature of an embodiment of the present invention.

### DETAILED DESCRIPTION

Reference will now be made in detail to features of embodiments of the present invention, examples of which are illustrated in the accompanying drawings, wherein like reference numerals refer to the like elements throughout. The features are described below to explain embodiments of the present invention by referring to the figures.

Before explaining features of embodiments of the invention in detail, it is to be understood that the invention is not limited in its application to the details of design and the arrangement of the components set forth in the following description or illustrated in the drawings. The invention is capable of other features or of being practiced or carried out in various ways. Also, it is to be understood that the phraseology and terminology employed herein is for the purpose of description and should not be regarded as limiting.

By way of introduction, for a visually impaired person seeking to have increased independence, a natural response to an environmental stimulus, *e.g.* audio, change in light and/or partial vision may be to point a finger in the direction of the environmental stimulus. When the visually impaired person is wearing a visual assistance system based on a camera, according to an embodiment of the present invention, an image of the finger may be captured and recognized by the wearable device. Successful and reliable detection of the image of the finger allows for further image processing in order to assist the visually impaired person with various challenges in the environment. Thus, there is a need for and it would be advantageous to have a user interface for wearable device including a camera in which the wearable device is controlled by recognizing a finger of the user in the field of view of the camera.

In addition, detection of a finger by a wearable device may be useful in other fields such as a general user-machine interface not specifically designed for visually impaired persons.

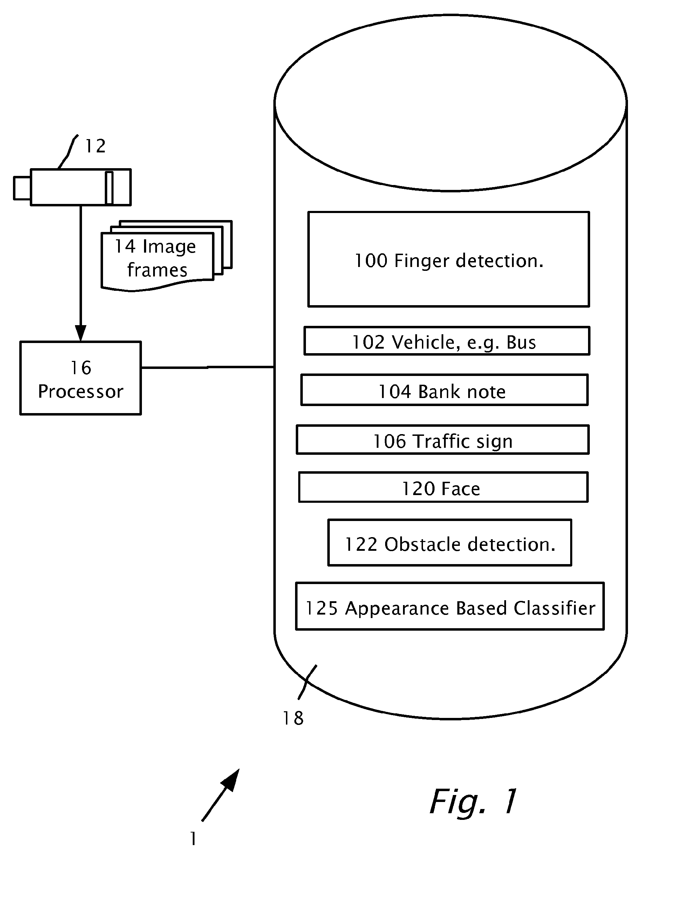

Reference is now made to Figure 1 which shows a block diagram of a wearable visual assistance system **1,** according to a feature of an embodiment of the present invention. A camera **12** captures image frames **14** in a forward field of view of camera **12.** Camera **12** may be a monochrome camera, a color camera such as a red green blue (RGB) camera or a near infra red (NIR) camera. Image frames **14** are captured and transferred to a processor **16** for image processing. The processing of image frames **14** may be based upon algorithms previously stored in memory or storage **18.** Storage **18** is shown to include modules such as finger detection **100,** vehicle detection and recognition **102,** bank note detection and recognition **104,** face detection **120** and/ or traffic sign detection and recognition **106.** An algorithm may be available for obstacle detection **122** optionally with use of an additional sensor (not shown).

An appearance-based classifier **125** may be used for finger detection and/or detection of other objects in the field of view of the camera such as a vehicle **102,** bank note **104,** traffic sign **106,** and/or face **120** of a person. Appearance-based classifiers **125** are previously trained on a training set of images, for instance a training set of images of fingers in general and/or a training set of images of fingers of the user. When trained, appearance-based classifier **125** may be used to classify and thereby recognize an object, *e.g.* finger, based on appearance of the image in an image frame. The use of appearance based classifiers **125** for recognition of objects such as a finger avoids use of color markers and/or rings on the finger used for detection of the finger by detection of an optical signature, i.e. color, of the marker or an electromagnetic signature of the ring.

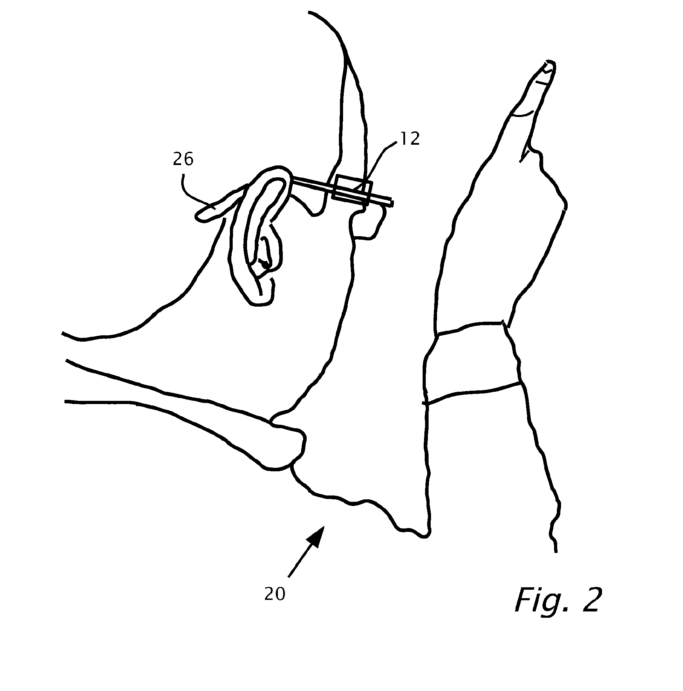

Reference is now made to Figure 2 which shows a line drawing **20** of a person wearing camera **12,** according to a feature of an embodiment of the present invention. In drawing **20,** camera **12** is shown mounted on eyeglasses **26,** worn by the person. Camera **12** may have substantially the same field of view as the field of view the person wearing eyeglasses **26.** The person is shown pointing his/her finger forward in the field of view of camera **12.** According to an embodiment of the present invention, the visually impaired person wearing visual assistance system **1** on her head naturally turns her head in the direction of an environmental stimulus. The object of interest then comes into the field of view of camera **12.** The visually impaired person may use a finger as a control input to system **1.** The back of the finger may normally be detected. Finger classification is improved since the orientation of the finger being held by the visually impaired person relative to the camera is relatively constrained. The constraint in finger orientation tends to improve the accuracy of the finger recognition.

Camera **12** may alternatively or additionally be wearable in other ways or on other parts of the body of the person. Camera **12** may be operatively attached to processor **16** by a cable (not shown) or by a wireless connection (Bluetooth™ for example). In addition a headset or ear piece (not shown) may be operatively attached to processor **16** by a cable (again not shown) or by a wireless connection. The headset or ear piece may provide an audible response to the person. The audible response may for example to indicate that his/her finger has been detected in the field of view of camera **12.** The audible response may be clicking type sound, beep or speech.

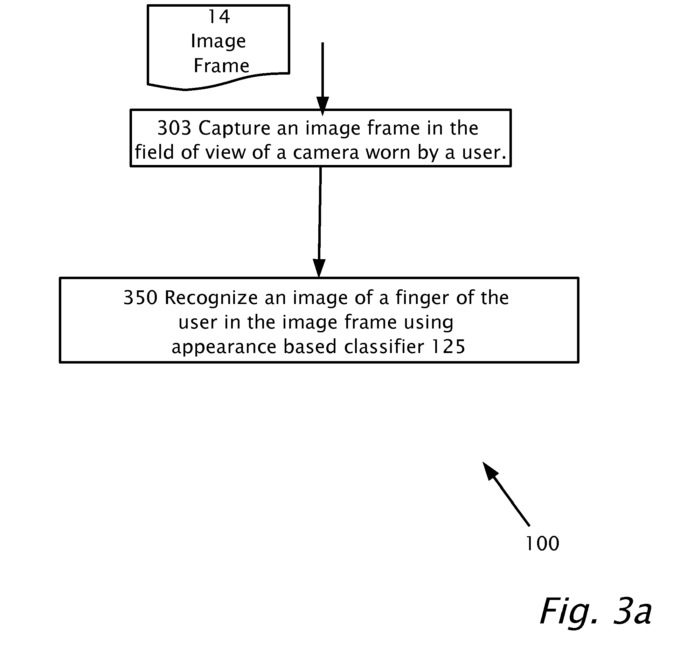

Reference is now made to Figure 3a which shows a flow chart of a method **100,** according to a feature of an embodiment of the present invention. Method **100** may be used by wearable device **1** to provide a user interface which provides control of wearable device **1** by a person wearing wearable device **1.** In step **303,** an image frame **14** is captured in the field of view of camera **12.** Within image frame **14,** a finger of the person in the field of view of camera **12** may be recognized (step **350)** by the use of appearance-based classifier **125.** Step **350** may also include the user (via his/her finger being recognized) to control wearable device **1.** A control input to wearable device **1** may provide for a search in the vicinity of the image of the finger for an image of an object. The object may be a vehicle, a newspaper, a signpost, a notice, a book, a bus, a bank note or a traffic signal for example. Step **350** may also be performed to locate the image of the finger of the user over more than one image frame **14.** The user may move her finger before camera **12** to control wearable device **1.** Changes in the images of the finger of the user by virtue of movement, position and orientation of the finger may be tracked from image frame **14** to another image frame **14.** The tracked changes in the image of the finger over multiple image frames **14** may be used by the user to query wearable device **1** regarding the object in the environment in the field of view of camera **12.**

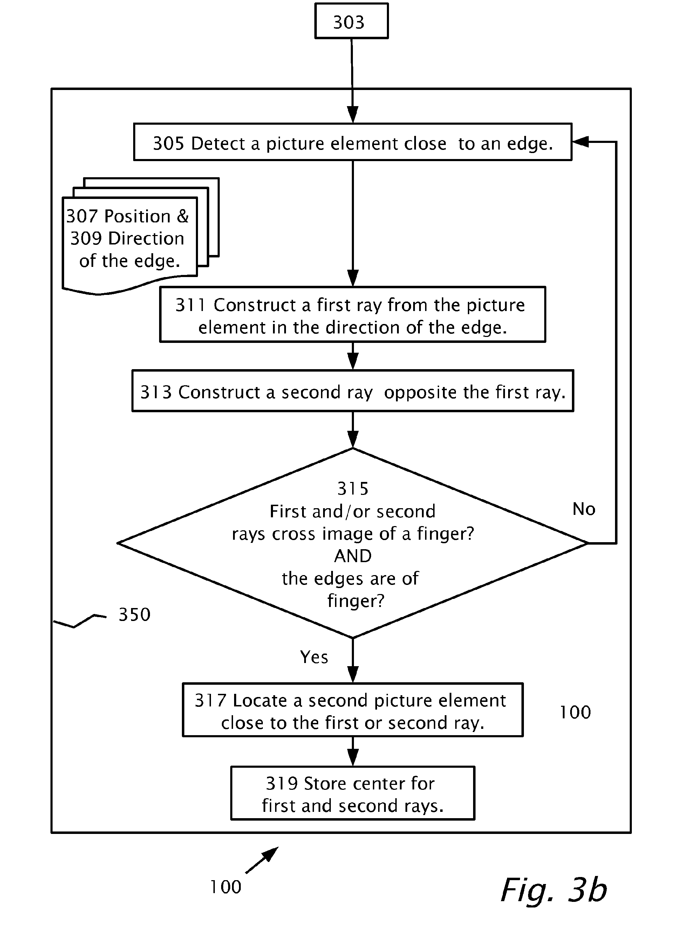

Reference is now made to Figure 3b which shows an example of a portion of a simplified algorithm **350** for recognizing an image of a finger, according to a feature of an embodiment of the present invention. In step **303,** an image frame **14** is captured in the field of view of camera **12.** In image frame **14,** a picture element is detected (step **305)** which is in close vicinity to an edge shown within image frame **14.** The edge feature may include a measurable change in gray scale or color within image frame **14.** The edge may be found by using a Sobel operator technique or another edge finding technique known in the art of image processing. A direction **309** and a position **307** for the edge may be calculated in terms of a gradient vector, which points for instance to the normal of the detected edge feature or the direction of largest intensity increase. The magnitude of the gradient vector corresponds to the rate of intensity, *e.g.* gray scale and/ or color, change in that direction.

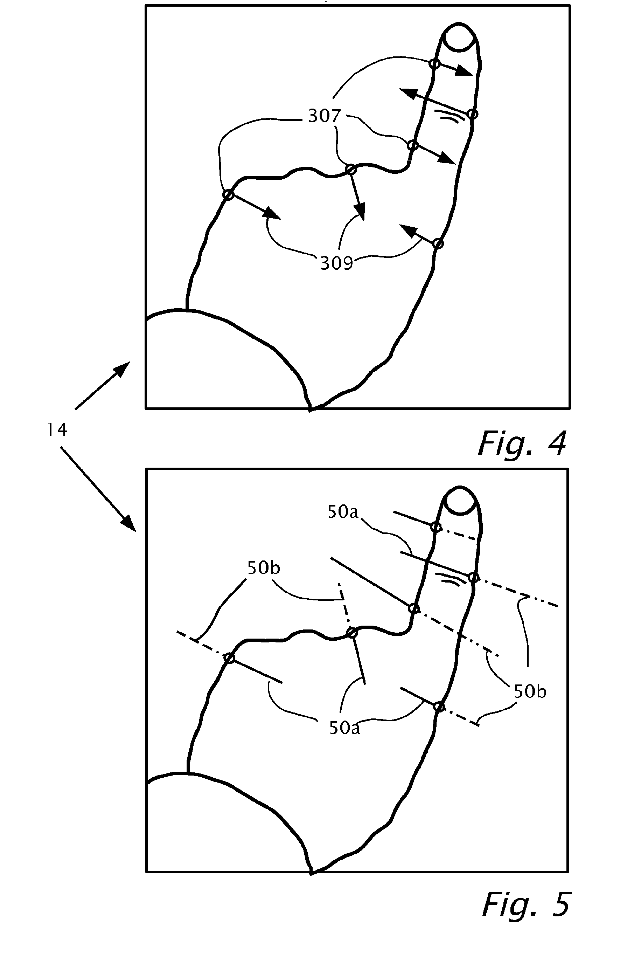

Reference is now also made to Figure 4 which shows an image frame **14** of a hand with a pointing finger, according to a feature of an embodiment of the present invention. A number of image positions **307** and directions **309** are shown by arrows, define various edges found in image frame **14.**

Reference is now also made to Figure 5 which illustrates further details of processing an image frame **14,** according to a feature of an embodiment of the present invention. At positions **307** of edges and directions of edges **309,** for each edge, a first ray **50a** (shown as a solid line) may be projected (step **311)** from a picture element in vicinity of an edge in the direction of the edge. A second ray **50b** (shown with dotted line) may then also be projected (step **313)** from the picture element which is one hundred and eighty degrees opposite to the first ray projected in step **311.**

A machine-learning based classifier may then be used to classify if the first ray **50a** and/or second ray **50b** originate at an edge feature of a first side of an image of a finger and crosses the image of the finger. The machine-learning based classifier decides (decision block **315),** whether the first ray **50a** and/or second ray **50b** crosses an image of a finger and if the edge feature is of a finger or not. If so, a first ray **50a** and/or second ray **50b** cross an image of a finger, another picture element in the vicinity of first ray **50a** and second ray **50b** may be located (step **317)** where the other picture element coincides with a second edge of the image of the finger.

The machine-learning based classifier may also be used in step **317** for the location of first and second rays **50a/50b** projected in steps **311** and **313** respectively, to classify and therefore to determine if two fingers have been used to point, such as an index finger and middle finger, a middle finger an ring finger and/or an index finger and thumb. The fingers may be specifically an index finger and a thumb, an index finger and a middle finger and/or a thumb and a pinky finger. In other embodiments, the fingers may be non specific, and their relative locations may be the only important information. The machine-learning based classifier may also be similarly trained to classify and therefore to determine, images of a single pinky finger, a thumb which may be up or down and/or to differentiate if a finger or fingers are on the left hand or the right hand.

A center point on first ray **50a** and/or second ray **50b** may be located on the image of the finger and the center point on first ray **50a** and/or on second ray **50b** may be stored (step **319)** in storage **18.**

If in decision block **315,** first ray **50a** and second ray **50b** and do not originate at an edge feature of an image of a finger, then detection of a picture element may continue in step **305.**

The machine-learning based classifier may input intensity values (*e.g.* gray scale or color red/green/blue/ values) from first ray **50a** and second ray **50b** taken at different ray lengths. The machine-learning based classifier inputs rays **50a/50b** with different ray lengths values. The machine-learning based classifier may be based on a support vector machine (SVM). In other embodiments, an ensemble classifier such as Random Forest may be used. The machine-learning based classifier classifier may be trained over many examples of fingers in order to provide a good classification power. In some configurations, rays **50a/50b** that are within a previously determined angle range such as +/- 45 degrees from vertical may be considered, in order to find mostly vertical fingers within 45 degrees of being vertical. The use of the machine-learning based classifier therefore, may provide an additional filtering function which saves computation.

In other embodiments, the decision in decision block **315** may be performed at least in part by searching for second edge features along rays **50a/50b** and if an edge feature is found, then the first edge features at positions **307** may be paired with the second edge features along ray **50a/50b.** When the distances between the first and second edge features are consistent with the width of an image of a finger, given a known focal length of camera **12** and a known of range of distance between the finger and camera **12,** then the image portion in the vicinity of rays **50a/50b** may be used for classification by a machine-learning based classifier.

Referring back to Figure 3b, steps **305-319** may be repeated multiple times for multiple picture elements so that center points may be clustered into clusters **60a-60n** in image space within image frame **14** based on relative location of the centers. Each of clusters **60a-60n** may be analyzed individual.

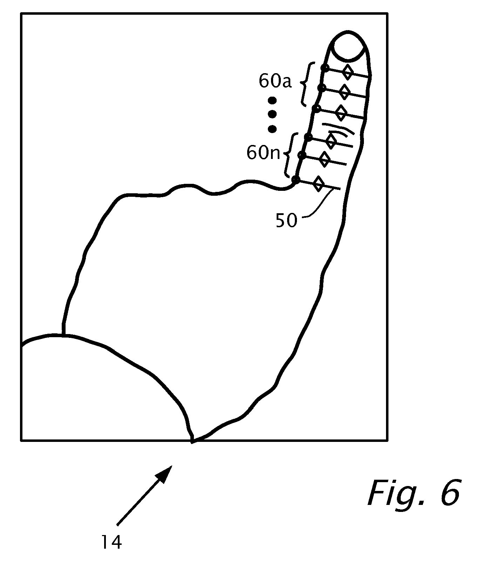

Reference is now also made to Figure 6 which shows an example of clusters **60a-60n** according to a feature of an embodiment of the present invention. The center points as marked by diamonds, coincide longitudinally with the image of a finger.

For recognition of an image of finger, the finger image should amass enough crossing rays **50.** Crossing rays **50** should form a short linear span on the image with a consistent width. Once there are clusters **60a-60n,** with a substantially constant width between paired edge features and according to a previously defined number density of rays **50** in each of clusters **60a-60n,** clusters **60a-60n** may be classified using appearance-based classifier **125** for an image portion suspected to include an image of a finger.

Prior to classification using appearance-based classifier **125,** clusters **60a....60n** may be reoriented, to straighten the image of the finger so that the straightened image is more similar to an image of a straightly extended finger. Each clusters **60a-60n** has a known location, size and rotation angle. Known location, size and rotation angle may define a frame of reference so it is possible to place a rectangle over a finger candidate. The rectangle can be straightened (e.g. by image rotation) and then passed to the appearance-based classifier.

The classification of appearance-based classifier **125** of the suspected image portion may be used therefore to detect an image of a finger in the field of view of camera **12.**

Appearance-based classifier **125** may be any image classifier known in the art of vision processing. The appearance-based classifier can utilize image features such as HOG (Histogram of Gradients), SIFT (Scale Invariant Feature Transform), ORB (Oriented BRIEF features) etc. The appearance-based classifier which computes features within the rectangle may be based on support vector machines or Randomized Forest classification to decide if the features are likely to include an image of a finger.

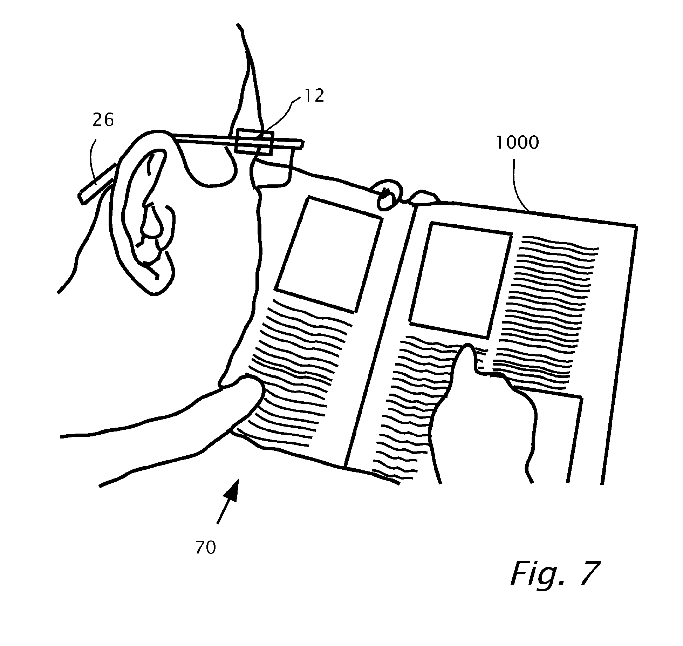

Reference is now made to Figures 7-9 which show examples in which detection of the finger may be used for further image processing to improve the quality of life of a visually impaired person wearing a visual assistance system based on camera **12.** The recognition of the finger may be associated with a specific function of system **1** as shown in the examples which follow. The finger may be recognized during different gestures and have distinct images or appearances recognizable by system **1.** Each distinct appearance of the recognized image of the finger may be associated with a previously defined action or function of system **1.**

Referring now to Figure 7, a visual field **70** is shown of a person wearing camera **12.** Visual field **70** of the person includes a document **1000** and the pointing of the index finger of the right hand to text in document **1000.** Document **1000** in this case is a book but also may be a timetable, notice on a wall or a text on some signage in close proximity to the person such as text on the label of a can for example. When the image of the finger is detected, subsequent processing may be performed to recognize text in image frame **14** in the vicinity of the detected image of the finger.

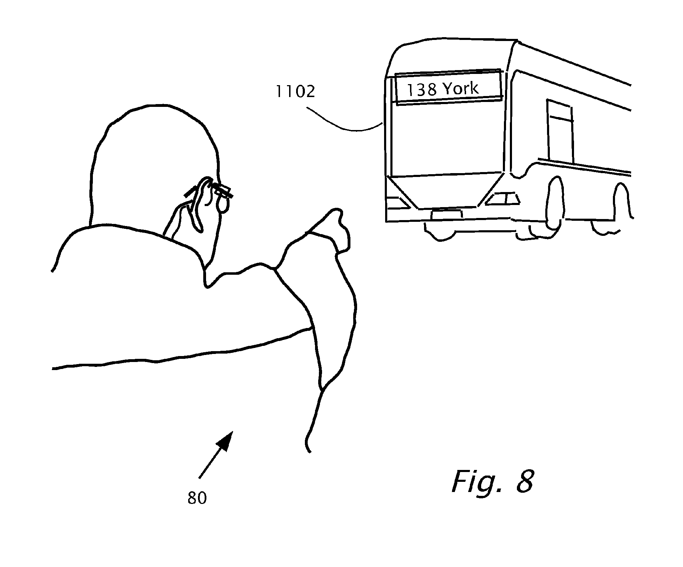

Referring now to Figure 8 a visual field **80** is shown of a person wearing camera **12** mounted on glasses **26.** Here, visual field **80** includes a bus **1102** and the pointing of the index finger of the right in the general direction of bus **1102.** Bus **1102** also includes a text such as the bus number and destination. The text may also include details of the route of bus **1102.** When the image of the finger is detected, subsequent processing may be performed to recognize text, e.g. bus number and destination in image frame **14** in the vicinity of the detected image of the finger.

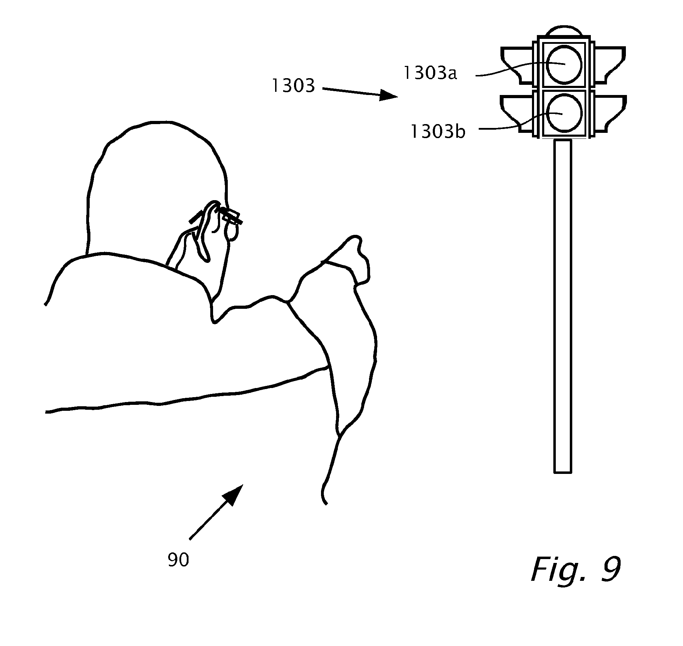

Referring now to Figure 9 shows a visual field **90** is shown of a person wearing camera **12.** Visual field **90** includes a traffic signal **1303** and the pointing of the index finger of the right in the general direction of traffic signal **1303**.Traffic signal **1303** has two sign lights **1303a** (red) and **1303b** (green) which may be indicative of a pedestrian crossing sign or alternatively traffic signal **1303** may have three sign lights (red, amber, green) indicative of a traffic sign used by vehicles as well as pedestrians. When the image of the finger is detected, subsequent processing may be performed to recognize the state of traffic signal **1303** in image frame **14** in the vicinity of the detected image of the finger. The state of traffic signal **1303** as a consequence of further processing, audibly informs the person not to cross the road because traffic signal **1303** is red.

In the above visual fields **70, 80** and **90,** a portion of an image is detected to be an image of a finger according to method **100,** and a candidate image of an object may be searched in image frame **14** in the vicinity of the image of the detected finger. The candidate image may be classified as an image of a particular object, or in a particular class of objects, e.g. bus, bank note, text, traffic signal and is thereby recognized. The person may be notified of an attribute related to the object.

System **1** may be controlled to be responsive to the object in the environment. System **1** may provide feedback, *e.g.* audible feedback, to provide a confirmation to the person that the pointed finger is recognized. An example of the confirmation may be auditory via speaker, headphones or bone conduction headset for example. System **1** may vary the confirmation based on the location, angle or size of the detected finger and/or which of the user's fingers is recognized. Showing and moving the finger may control aspects of system **1.**

The person may track the candidate image of the object by maintaining the candidate image in the image frames **14.** Tracking may be performed by a head-worn camera **12** by the user of system **1** by orienting or maintaining his/her head in the general direction of the object. Tracking may be performed by the visually impaired user by sound, situational awareness, or by partial vision. Tracking is facilitated when there is minimal parallax error between the view of the user and the view of the camera. The tracking may also be based on a finger pointing in the direction of the object.

The tracked candidate image may be then selected for classification and recognition. Responsive to the recognition of the object, the person may be audibly notified of an attribute related to the object. System **1** may be configured to recognize a bus **1102** and/or a traffic signal **1303.** If the recognized object is a bus **1102,** the attribute provided may be the number of the bus line, the destination of the bus **1102,** or the route of the bus **1102.** If the recognized object is a traffic signal **1303** then the attribute may be the state of the traffic signal. If the recognized object is book **1000** or a newspaper then the attribute may be to recognize text in the vicinity of the pointed finger.

### Definitions

The term "image intensity" as used herein refers to either gray scale intensity as in a monochromatic image and/or one or more color intensities, for instance red/green/blue/, in a color image.

The term "detection" is used herein in the context of an image of a finger and refers to recognizing an image in a portion of the image frame as that of a finger, for instance a finger of a visually impaired person wearing the camera. The terms "detection" and "recognition" in the context of an image of a finger are used herein interchangeably.

The term "appearance-based classifier" as used herein is trained to recognize an image of according to appearance of the image. For instance, an image of a finger may be used to detect that a finger is in the field of view of the camera by classifying, based on appearance, the image of the object to a high confidence level as belonging to the class of fingers and not another class of objects, *e.g.* bank notes. The term "appearance based classification as used herein excludes the use of colored markers on the finger for detection of the finger.

The term "classify" as used herein, refers to a process performed by an appearance- based classifier based on characteristics of an image of an object to identify a class or group to which the object belongs. The classification process includes detection of an object to be in a specific class of objects.

The term "edge or "edge feature" as used herein refers to an image feature having in image space a significant gradient in gray scale or color.

The term "edge direction" is the direction of the gradient in gray scale or color in image space.

The term "ray" as used herein in the context of vision processing in image space, is a portion of a line which originates at a point and extends in a particular direction to infinity.

The term 'field of view" (FOV) as used herein is the angular extent of the observable world that is visible at any given moment either by an eye of a person and/ or a camera. The focal length of the lens of the camera provides a relationship between the field of view and the working distance of the camera.

The term "projecting a ray" or "to project a ray" as used herein, in the context of vision processing, is the process of constructing a ray in image space from a point in a specified direction. The terms "project" a ray and "construct" a ray are used herein interchangeably. The term "opposite to or "opposing" in the context of a first ray refers to a second ray with the same or similar origin and extends at or approximately 180 degrees to the first ray.

The term "attribute" as used herein, refers to specific information of the recognized object. Examples may include the state of a recognized traffic signal, or a recognized hand gesture such as a pointed finger which may be used for a control feature of the device; the denomination of a recognized bank note is an attribute of the bank note; the bus number is an attribute of the recognized bus.

The term "tracking" an image as used herein, refers to maintaining the image of a particular object in the image frames. Tracking may be performed by a head-worn camera by the user of the device by orienting or maintaining his head in the general direction of the object. Tracking may be performed by the visually impaired user by sound, situational awareness, or by partial vision. Tracking is facilitated when there is minimal parallax error between the view of the person and the view of the camera.

The term "mobile" as used herein, refers to a camera which is able to move or be moved freely or easily by a user by virtue of the user wearing the camera while the camera is in use. The term "immobile" as used herein means not "mobile".

The fingers of a hand are termed herein as follows: the first finger is a thumb, the second finger is known herein as an "index finger", the third finger is known herein as a "middle finger", the fourth finger is known herein as "ring finger" and the fifth finger is known herein as "pinky" finger.

The indefinite articles "a", "an" is used herein, such as " a finger", "a ray", "an edge" have the meaning of "one or more" that is "one or more fingers" "one or more rays" or "one or more edges".

Although selected embodiments of the present invention have been shown and described, it is to be understood the present invention is not limited to the described embodiments. Instead, it is to be appreciated that changes may be made to these embodiments and combinations of various features of different embodiments may be made without departing from the principles and spirit of the invention, the scope of which is defined by the claims and the equivalents thereof.

All optional and preferred features and modifications of the described embodiments and dependent claims are usable in all aspects of the invention taught herein. Furthermore, the individual features of the dependent claims, as well as all optional and preferred features and modifications of the described embodiments are combinable and interchangeable with one another.

The disclosures in United States patent application number 13/397,919 and European patent application number EP 12 275 016.9, from which this application claims priority, and in the abstract accompanying this application, are incorporated herein by reference.

## Claims

1. A method for interfacing between a wearable device and a user of the wearable device, the device including a camera and a processor connectible thereto, the method comprising:
capturing an image frame from the camera; and
within the image frame, recognizing an image of a finger of the user thereby controlling the wearable device.

2. The method of claim 1, wherein said recognizing is performed by using an appearance-based classifier.

3. The method of claim 2, further comprising:
previously training said appearance-based classifier on at least one training set of images selected from the group consisting of: images of a plurality of fingers and a plurality of images of the finger of the user.

4. The method of any preceding claim, wherein said recognizing is performed from information in a single image frame.

5. The method of any preceding claim, wherein said recognizing is performed while said camera is immobile.

6. The method of any preceding claim, further comprising:
upon said recognizing, providing confirmation to the user that said finger is recognized.

7. The method of any preceding claim, wherein said recognizing a finger includes said recognizing two fingers selected from the group consisting of: an index finger and thumb, an index finger and middle finger and a thumb and pinky finger.

8. The method of any preceding claim, including, upon said recognizing, searching in the vicinity of the image of the finger for text.

9. The method of any preceding claim, including, upon said recognizing, searching in the vicinity of the image of the finger for an image of an object selected from the group consisting of: a vehicle, a newspaper, a signpost, a notice, a book, a bus, a bank note and a traffic signal.

10. The method of any preceding claim, further comprising:
locating in a sequence of image frames an image of said finger;
tracking changes of said image in said sequence, wherein said changes are indicative of a query of the user regarding an object in the field of view of the camera.

11. A wearable device including a camera connectible to a processor, the processor operable to:
capture an image frame from the camera; and
within the image frame, recognize an image of a finger of the user to control the wearable device.

12. The wearable device of claim 11, wherein the image of the finger of the user is recognized by using an appearance-based classifier.

13. The wearable device of claim 11 or 12, wherein recognition of respective images of different fingers of the user provides different control inputs to the wearable device.

14. The wearable device of any of claims 11 to 13, further including a speaker or an ear piece operable to audibly confirm to the person or user that a finger is detected.

15. The wearable device of any of claims 11 to 14 operable to search the image frame in the vicinity of the image of the finger for an image of an object in the environment of the user.
